# FASCICULE DE BREVET EUROPEEN

(11) **EP 3 864 299 B1**
(45) Date de publication et mention de la délivrance du brevet: **24.07.2024**
(21) Numéro de dépôt: 19817382.5
(22) Date de dépôt: 07.10.2019
(51) Int. Cl.: F04D 29/32, F01D 7/00, B64C 11/38, B64C 11/40, B64C 11/44, F02K 3/06

(54) **TURBOMACHINE COMPRENANT UN ROTOR PORTANT DES PALES A CALAGE VARIABLE**
TURBINENMOTOR MIT EINEM ROTOR MIT SCHAUFELN MIT VERSTELLBARER NEIGUNG
TURBINE ENGINE COMPRISING A ROTOR WITH VARIABLE-PITCH BLADES

(30) Priorité: 12.10.2018 FR 1859479
(43) Date de publication de la demande: 18.08.2021
(73) Titulaire: SAFRAN AIRCRAFT ENGINES, 75015 Paris (FR)
(72) Inventeur: TAJAN, Sébastien, Emile, Philippe, 77550 MOISSY-CRAMAYEL (FR); SERVANT, Régis, Eugène, Henri, 77550 Moissy-Cramayel (FR); CHARIER, Gilles, Alain, Marie, 77550 Moissy-Cramayel (FR); PATSOURIS, Emmanuel, Pierre, Dimitri, 77550 Moissy-Cramayel (FR)
(74) Mandataire: Gevers & Orès
(86) Numéro de dépôt international: PCT/FR2019/052371
(87) Numéro de publication internationale: WO 2020/074817

(56) Documents cités:
- EP-A1- 1 306 558
- EP-A1- 3 165 452
- FR-A1- 2 712 250
- FR-A1- 3 050 433
- GB-A- 2 285 098
- GB-A- 2 461 786
- US-A- 2 850 103

## Description

### DOMAINE TECHNIQUE

La présente invention concerne une turbomachine comprenant un rotor portant des pales à calage variable, et plus précisément une architecture moteur optimisée et adaptée à une telle turbomachine.

### ETAT DE L'ART

Une turbomachine peut comprendre un rotor muni de pales à calage variable c'est à dire des pales dont le calage (et plus précisément l'angle de calage) est réglable en fonction des paramètres de vol, de manière à optimiser le fonctionnement de la turbomachine. Pour rappel, l'angle de calage d'une pale correspond à l'angle, dans un plan longitudinal perpendiculaire à l'axe de rotation de la pale, entre la corde de la pale et le plan de rotation du rotor.

Une telle turbomachine comprend un système de commande du calage des pales. Le système de commande comprend généralement un actionneur commun à toutes les pales et un mécanisme propre à chacune des pales, ce mécanisme étant configuré pour transformer le mouvement initié par l'actionneur en un mouvement rotatif de la pale correspondante.

Traditionnellement, l'actionneur est solidaire de la structure fixe de la turbomachine (et autrement dit placé dans un repère fixe) et les différents mécanismes sont solidaires du rotor (et autrement dit placés dans un repère tournant). Le système de commande comprend en outre un palier de transfert de charge (plus connu sous l'acronyme anglais LTB pour « Load Transfert Bearing ») permettant d'assurer la transmission du mouvement initié par l'actionneur (repère fixe) aux mécanismes (repère tournant).

Le mouvement de l'actionneur permet de régler de manière synchronisée le calage de l'ensemble des pales via notamment le palier de transfert de charge et les différents mécanismes.

Il est également connu du document EP-A1-3165452 d'avoir l'actionneur et les mécanismes solidaires du rotor (repère tournant). Le système de commande (à savoir l'actionneur et les mécanismes) est positionné dans une enceinte annulaire fermée et délimitée par le rotor. L'actionneur est ici un actionneur hydraulique. Le système de commande comprend ainsi un raccord tournant (ou joint tournant) permettant de transférer l'énergie hydraulique depuis le repère fixe jusqu'au repère tournant.

Le fait d'avoir l'actionneur dans un repère tournant permet de ne pas avoir besoin d'un palier de transfert de charge pour transmettre le mouvement de l'actionneur depuis le repère fixe jusqu'au repère tournant mais également de ne pas avoir besoin d'utiliser des servitudes télescopiques nécessaires à l'alimentation hydraulique de l'actionneur.

L'architecture décrite dans le document précité présente toutefois des inconvénients. Le rotor présente une masse et un encombrement importants. En effet, le rotor présente en section une forme de parallélogramme définissant intérieurement l'enceinte dans laquelle est placé notamment le système de commande. En outre, une telle architecture présente un inconvénient lors d'une opération de maintenance sur le système de commande. En effet, lors d'une telle opération de maintenance, il est nécessaire de démonter le rotor afin d'accéder au système de commande placé à l'intérieur, au détriment de la productivité.

La demanderesse a en outre constaté qu'il est important de limiter le débattement angulaire du rotor en fonctionnement au niveau du raccord tournant afin d'éviter l'apparition de fuites hydrauliques et de maximiser la durée de vie de ce dernier.

L'art antérieur comprend également les documents US-A-2850103, GB-A-2285098, FR-A1-3050433 et GB-A-2461786.

L'objectif de la présente invention est ainsi de proposer une turbomachine présentant une architecture moteur optimisée permettant de remédier aux inconvénients et répondre aux attentes précitées.

### EXPOSE DE L'INVENTION

L'invention propose à cet effet une turbomachine d'axe longitudinal X comprenant :
- un rotor portant au moins une pale à calage variable, ledit rotor étant guidé en rotation par rapport à une structure fixe de ladite turbomachine via un premier palier et un second palier ;
- un système de commande du calage de ladite au moins une pale, ledit système de commande étant solidaire dudit rotor et comprenant au moins un premier actionneur mis en mouvement par une énergie, ledit système de commande étant disposé axialement en amont desdits premier et second paliers ;
- un dispositif de transfert de ladite énergie disposé axialement entre le premier palier et le second palier, ledit dispositif de transfert comprenant un organe fixe solidaire de ladite structure fixe et un organe mobile solidaire dudit rotor ;
caractérisée en ce que le rotor est annulaire et définit un espace interne ouvert vers l'amont dans lequel est placé ledit système de commande.

Une telle disposition du système de commande, à savoir en amont des premier et second paliers et dans l'espace interne, permet de simplifier le rotor, et par conséquent de réduire la masse et l'encombrement de ce dernier, mais également de simplifier significativement la maintenance du système de commande. En effet, pour accéder au système de commande, il suffit de démonter le cône d'entrée.

En outre, le fait de disposer axialement le dispositif de transfert entre le premier palier et le second palier permet d'éviter l'apparition de fuites hydrauliques (lorsque l'énergie transférée est de l'énergie hydraulique) et de maximiser la durée de vie de ce dernier. En effet, le débattement angulaire est réduit au maximum au niveau de la portion du rotor située axialement entre le premier palier et le second palier. Ainsi, lorsque la turbomachine est en fonctionnement, les sollicitations mécaniques de l'organe mobile sur l'organe fixe sont minimisées.

La turbomachine selon l'invention peut comprendre une ou plusieurs des caractéristiques suivantes, prises isolément les unes des autres ou en combinaison les unes avec les autres :
- le rotor comprend un anneau de support de ladite au moins une pale et un arbre présentant une portion tronconique et une portion cylindrique sur laquelle sont rapportés lesdits premier et second paliers ainsi que ledit organe mobile dudit dispositif de transfert ;
- ledit premier actionneur est un actionneur hydraulique, ledit dispositif de transfert étant un raccord tournant, ledit système de commande comprenant un mécanisme configuré pour transformer le mouvement initié par ledit actionneur hydraulique en un mouvement rotatif de ladite au moins une pale ;
- ledit premier actionneur est un actionneur électrique, ledit dispositif de transfert étant un transformateur tournant, ledit système de commande comprenant un mécanisme configuré pour transformer le mouvement initié par ledit actionneur électrique en un mouvement rotatif de ladite au moins une pale ;
- ledit premier actionneur est un moteur électrique comportant un arbre de sortie rotatif, ladite au moins une pale étant mobile en rotation autour d'un axe Y sensiblement perpendiculaire audit axe X, ledit mécanisme comprenant une manivelle présentant une première extrémité centrée sur ledit axe Y et couplée en rotation avec ladite au moins une pale et une seconde extrémité présentant un suiveur de came excentré par rapport audit axe Y, ledit suiveur de came coopérant avec une came se présentant sous la forme d'une rainure pratiquée dans une bague, ladite bague étant couplée en rotation avec ledit arbre de sortie dudit moteur électrique ;
- ledit dispositif de transfert est un transformateur tournant, ledit premier actionneur est un moteur électrique configuré pour actionner une pompe d'un circuit hydraulique solidaire dudit rotor, ledit circuit comprenant un réservoir de liquide connecté avec ladite pompe, ledit circuit comprenant un second actionneur hydraulique alimenté en liquide sous pression par ladite pompe, ledit système de commande comprenant un mécanisme configuré pour transformer le mouvement initié par ledit second actionneur en un mouvement rotatif de ladite au moins une pale ;
- ledit circuit comprend un accumulateur configuré pour mettre en position drapeau ladite au moins une pale, en particulier en cas de défaillance du transformateur tournant ;
- le rotor est guidé en rotation par rapport à un support annulaire de ladite structure fixe, ledit support étant rapporté sur un moyeu interne d'un carter intermédiaire, ledit support comprenant une paroi amont tronconique, une paroi aval tronconique et une paroi cylindrique tubulaire dans laquelle sont logés le premier palier et l'organe fixe dudit dispositif de transfert, la paroi cylindrique étant disposée axialement entre ladite paroi amont et ladite paroi aval ;
- le premier palier est disposé en amont du second palier ;
- ledit rotor est couplé en rotation à un porte-satellites d'un réducteur.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en demi-coupe axiale (ou longitudinale) d'une turbomachine d'aéronef partiellement représentée, selon un premier mode de réalisation ;
- la figure 2 est une vue schématique en demi-coupe axiale d'une turbomachine d'aéronef partiellement représentée, selon un second mode de réalisation ;
- la figure 3 est une vue schématique en demi-coupe axiale d'une turbomachine d'aéronef partiellement représentée, selon un troisième mode de réalisation ;
- la figure 4 est une vue schématique en demi-coupe axiale d'une turbomachine d'aéronef partiellement représentée, selon un quatrième mode de réalisation.

### DESCRIPTION DETAILLEE

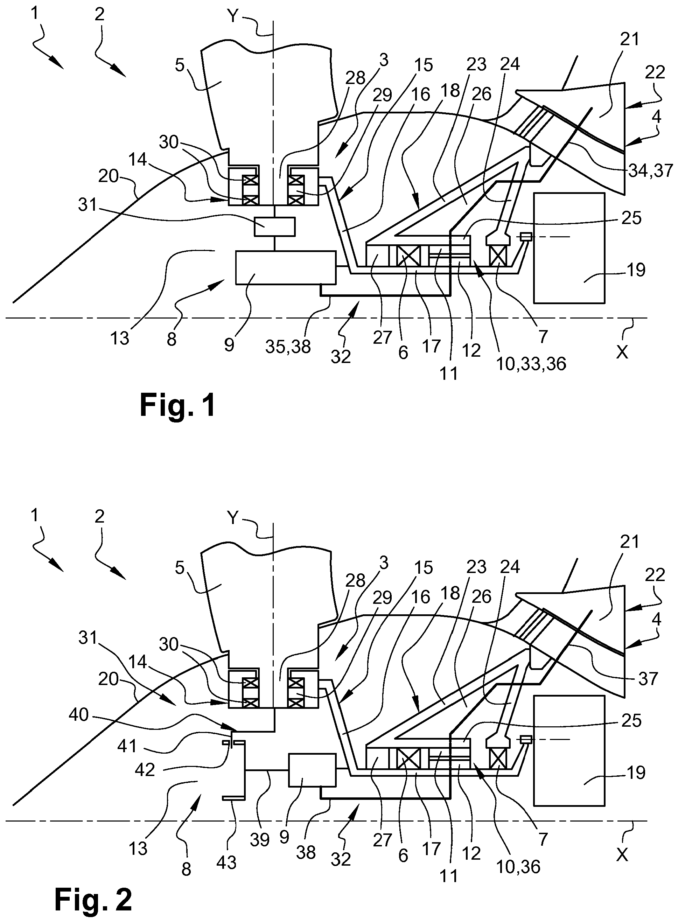

Sur les figures 1 à 4 est représentée partiellement une turbomachine 1 d'axe longitudinal X comprenant une soufflante carénée 2. La soufflante 2 comporte un rotor 3 mobile (autour de l'axe X) par rapport à une structure fixe 4, le rotor 3 portant une série de pales à calage variable 5. La soufflante 2 est placée en amont d'un générateur de gaz comportant par exemple un compresseur basse pression, un compresseur haute pression, une chambre de combustion, une turbine haute pression et une turbine basse pression.

Par convention, dans la présente demande, les termes « amont » et « aval » sont définis par rapport au sens de circulation des gaz dans la soufflante 2 (ou la turbomachine 1). De même, par convention dans la présente demande, les termes « interne », « externe », « intérieur » et « extérieur » sont définis radialement par rapport à l'axe longitudinal X de la turbomachine 1, qui est notamment l'axe de rotation des rotors des compresseurs et turbines.

Le rotor 3 est guidé en rotation par rapport à la structure fixe 4 de la turbomachine 1 via un premier palier 6 et un second palier 7. La turbomachine 1 comprend un système de commande du calage 8 d'au moins une pale 5. Le système de commande 8 est solidaire du rotor 3 et comprend au moins un premier actionneur 9 mis en mouvement (ou actionné) par une énergie. Le système de commande 8 est disposé axialement en amont des premier et second paliers 6, 7. La turbomachine 1 comprend en outre un dispositif de transfert de l'énergie 10 disposé axialement entre le premier palier 6 et le second palier 7. Le dispositif de transfert 10 comprend un organe fixe 11 solidaire de la structure fixe 4 et un organe mobile 12 solidaire du rotor 3. Le rotor 3 est annulaire et définit un espace interne ouvert 13 vers l'amont dans lequel est placé ledit système de commande 8.

On note que les modes de réalisation illustrés sur les figures 1 à 4 ne sont en rien limitatifs, l'architecture moteur selon l'invention pourrait par exemple être incorporée au rotor d'une soufflante non carénée d'une turbomachine, et notamment une turbomachine plus connue sous la désignation anglaise « Open Rotor » qui comprend généralement une soufflante non carénée ou deux soufflantes non carénées contrarotatives. Dans le cas d'un « Open Rotor » avec deux soufflantes non carénées contrarotatives dit « Pusher » (c'est dire avec les soufflantes placées en aval du générateur de gaz), l'architecture moteur selon l'invention pourrait s'adapter plus particulièrement au rotor de la soufflante aval. Dans le cas d'un « Open Rotor » avec deux soufflantes non carénées contrarotatives dit « Puller » (c'est dire avec les soufflantes placées en amont du générateur de gaz), l'architecture moteur selon l'invention pourrait s'adapter plus particulièrement au rotor de la soufflante amont.

Selon les modes de réalisation illustrés sur les figures 1 à 4, le rotor 3 comprend un anneau de support 14 des pales 5 et un arbre 15 annulaire présentant une portion tronconique 16 et une portion cylindrique 17 sur laquelle sont rapportés les premier et second paliers 6, 7 ainsi que l'organe mobile 12 du dispositif de transfert 10. Le rotor 3 est guidé en rotation par rapport à un support 18 annulaire de la structure fixe 4. Le rotor 3 est entraîné en rotation par un arbre de turbine via un réducteur de vitesse 19. Le réducteur 19 est ici de type épicycloïdal. Le rotor 3 est couplé en rotation à un porte-satellites du réducteur 19, le porte-satellites formant l'arbre de sortie du réducteur 19. Le rotor 3 comprend en outre un cône d'entrée 20 centré sur l'axe X et s'évasant de l'amont vers l'aval. Le démontage du cône d'entrée 20 permet d'accéder au système de commande 8, notamment lors d'une opération de maintenance.

Selon les modes de réalisation illustrés sur les figures 1 à 4, le support 18 est rapporté sur un moyeu interne 21 d'un carter intermédiaire 22. Le support 18 comprend une paroi amont 23 tronconique, une paroi aval 24 tronconique et une paroi cylindrique 25 tubulaire dans laquelle sont logés le premier palier 6 et l'organe fixe 11 du dispositif de transfert 10. Le second palier 7 est logé dans une ouverture pratiquée dans la paroi aval 24. La paroi cylindrique 25 est disposée axialement entre la paroi amont 23 et la paroi aval 24. Les parois amont et aval 23, 24, et la portion cylindrique 17 de l'arbre 15 définissent entre eux une enceinte 26 annulaire (communément appelée « enceinte huile ») dans laquelle sont logés et lubrifiés les premier et second paliers 6, 7. Les parois amont et aval 23, 24 s'évasent de l'amont vers l'aval. La paroi cylindrique 25 s'étend ici depuis l'extrémité interne de la paroi amont 23. Les premier et second paliers 6, 7 guident respectivement en rotation l'arbre 15 du rotor 3 par rapport à la paroi cylindrique 25 et la paroi aval 24 du support 18. Le premier palier 6 est disposé en amont du second palier 7. Le premier palier 6 est par exemple un palier à rouleaux. Le second palier 7 est par exemple un palier à billes. Des moyens d'étanchéité 27 sont placés en amont du premier palier 6 entre la paroi cylindrique 25 et la portion cylindrique 17 de l'arbre 15, de manière à garantir l'étanchéité de l'enceinte 26.

A titre d'exemple concret, le support 18 pourrait être décomposé en deux ensembles distincts, à savoir un premier ensemble comprenant la paroi amont 23 et la paroi cylindrique 25 et un second ensemble comprenant uniquement la paroi aval 24. Les deux ensembles seraient alors bridés sur le moyeu interne via des moyens de fixation communs tels que des vis.

Selon les modes de réalisation illustrés sur les figures 1 à 4, chaque pale 5 comprend un pied 28 monté dans un logement 29 de l'anneau 14 via deux paliers 30 de sorte que la pale 5 soit mobile en rotation autour d'un axe Y sensiblement perpendiculaire à l'axe X.

Selon les modes de réalisation illustrés sur les figures 1 à 3, l'anneau 14 est disposé en amont de l'arbre 15. La portion tronconique 16 de l'arbre 15 est disposée en amont de la portion cylindrique 17 de l'arbre 15. La portion tronconique 16 s'évase de l'aval vers l'amont. L'anneau 14 présente un diamètre supérieur à celui de la portion cylindrique 17 de l'arbre 15. Le système de commande 8 est placé sous l'anneau 14.

Selon le premier mode de réalisation illustré sur la figure 1, le système de commande 8 comprend au moins un premier actionneur 9 et un mécanisme 31 propre à chacune des pales 5.

Le système de commande 8 comprend soit un premier actionneur 9 par pale 5 soit un ou plusieurs premiers actionneurs 9 pour l'ensemble des pales 5.

Avantageusement, le système de commande 8 comprend un premier actionneur 9 commun à toutes les pales 5 et un mécanisme 31 propre à chacune des pales 5, ce mécanisme 31 permettant de transformer le mouvement initié par le premier actionneur 9 en un mouvement de rotation de la pale correspondante 5. Le mouvement du premier actionneur 9 permet de régler de manière synchronisée le calage de l'ensemble des pales 5 via notamment les différents mécanismes 31.

Le premier actionneur 9 peut être un actionneur hydraulique ou un actionneur électrique.

Dans le cas où le premier actionneur 9 est un actionneur hydraulique, l'énergie à transporter jusqu'à l'actionneur est de l'énergie hydraulique, et autrement dit un liquide sous pression tel que de l'huile. L'actionneur est alimenté en énergie hydraulique via un ensemble d'alimentation 32. L'ensemble d'alimentation 32 comprend le dispositif de transfert de l'énergie hydraulique 10 depuis le repère fixe (lié à la structure fixe 4) jusqu'au repère tournant (lié au rotor 3), ce dispositif de transfert 10 étant ici un raccord tournant 33 (ou joint tournant). Le raccord tournant 33 comprend un organe fixe 11 solidaire du support 18 (et plus précisément de la paroi cylindrique 25) et un organe mobile 12 solidaire du rotor 3 (et plus précisément de la portion cylindrique 17). Le raccord tournant 33 assure la transmission d'énergie hydraulique depuis l'organe fixe 11 vers l'organe mobile 12 (ou inversement) de manière étanche. Le raccord tournant 33 peut comprendre une ou plusieurs voies. L'ensemble d'alimentation 32 comprend en outre au moins une canalisation 34 raccordée à l'organe fixe 11 du raccord tournant 33, et au moins une canalisation 35 raccordée à la fois à l'organe mobile 12 du raccord tournant 33 et au premier actionneur 9.

Dans le cas où le premier actionneur 9 est un actionneur électrique, l'énergie à transporter jusqu'à l'actionneur est de l'énergie électrique, et autrement dit de l'électricité. L'actionneur est alimenté en énergie électrique via un ensemble d'alimentation 32. L'ensemble d'alimentation 32 comprend le dispositif de transfert de l'énergie électrique 10 depuis le repère fixe (lié à la structure fixe 4) jusqu'au repère tournant (lié au rotor 3), ce dispositif de transfert 10 étant ici un transformateur tournant 36 (ou transformateur rotatif). Le transformateur tournant 36 assure la transmission d'énergie électrique par induction électromagnétique. Un tel transformateur est par exemple présenté plus en détail dans les documents EP-A1-1306558 et FR-A1-2712250. Le transformateur tournant 36 comprend un organe fixe 11 solidaire du support 18 et un organe mobile 12 solidaire du rotor 3. L'ensemble d'alimentation 32 comprend en outre au moins un câble 37 raccordé à l'organe fixe 11 du transformateur tournant 36 et, au moins un câble 38 raccordé à la fois à l'organe mobile 12 du transformateur tournant 36 et au premier l'actionneur 9.

Le premier actionneur 9 comprend un élément fixe par rapport au rotor 3 et un élément mobile par rapport à l'élément fixe (et par conséquent par rapport au rotor 3). L'élément fixe du premier actionneur 9 est fixé sur le rotor 3. L'élément mobile est lié à au moins un mécanisme 31. Le premier actionneur 9 peut être linéaire ou rotatif.

Le mécanisme 31 comprend par exemple, pour chaque pale, une manivelle présentant une première extrémité centrée sur l'axe Y et couplée en rotation avec la pale correspondante et une seconde extrémité excentrée par rapport à l'axe Y et solidaire de l'élément mobile du premier actionneur 9. La manivelle permet de démultiplier l'effort nécessaire pour régler le calage de la pale correspondante.

Selon le second mode de réalisation illustré sur la figure 2, le système de commande 8 comprend au moins un premier actionneur 9 et un mécanisme 31 propre à chacune des pales 5.

Le système de commande 8 comprend soit un premier actionneur 9 par pale 5 soit un ou plusieurs premiers actionneurs 9 pour l'ensemble des pales 5.

Avantageusement, le système de commande 8 comprend un premier actionneur 9 commun à toutes les pales 5 et un mécanisme 31 propre à chacune des pales 5, ce mécanisme 31 permettant de transformer le mouvement initié par le premier actionneur 9 en un mouvement de rotation de la pale correspondante 5.

Plus précisément, le premier actionneur 9 est un moteur électrique comportant un arbre de sortie 39 rotatif. Pour chaque pale 5, le mécanisme 31 comprend une manivelle 40 présentant une première extrémité centrée sur l'axe Y et couplée en rotation avec la pale correspondante 5, et une seconde extrémité présentant un suiveur de came 41 excentré par rapport à l'axe Y. Le suiveur de came 41 coopère avec une came 42 se présentant sous la forme d'une rainure pratiquée dans une bague 43, la bague 43 étant couplée en rotation avec l'arbre de sortie 39 du moteur électrique.

Le mouvement rotatif de l'arbre de sortie 39 du moteur électrique permet de régler de manière synchronisée le calage de l'ensemble des pales 5 via notamment les différents mécanismes 31 (pour chaque mécanisme 31, un ensemble came 42 / suiveur de came 41 et une manivelle 40).

Le stator du moteur électrique est fixé sur le rotor 3.

Le moteur électrique peut comprend un réducteur. La bague 43 est par exemple couplé en rotation avec l'arbre de sortie 39 du moteur via une liaison par cannelures ou une liaison par dentelures.

L'ensemble d'alimentation 32 du moteur électrique est identique à celle d'un actionneur électrique détaillé ci-dessus en lien avec le premier mode de réalisation.

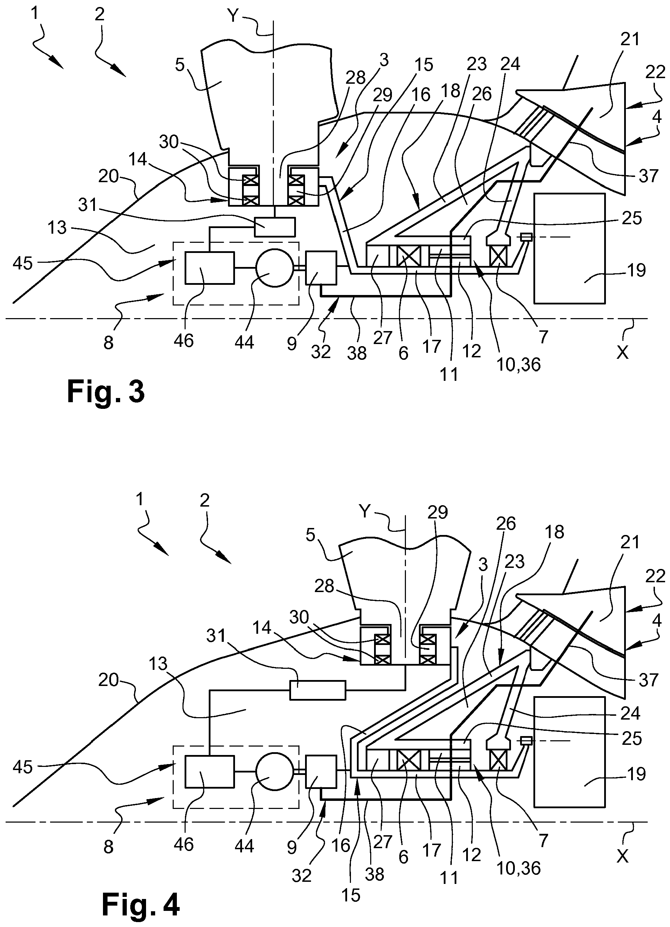

Selon le troisième mode de réalisation illustré sur la figure 3, le système de commande 8 comprend un premier actionneur 9 commun à toutes les pales 5 et un mécanisme 31 propre à chacune des pales 5.

Plus précisément, le premier actionneur 9 est un moteur électrique configuré pour actionner une pompe 44 d'un circuit hydraulique 45 solidaire du rotor 3. Le circuit 45 comprend un réservoir de liquide (ou bâche) connecté avec la pompe 44. Le circuit 45 comprenant un second actionneur 46 hydraulique alimenté en liquide sous pression par la pompe 44. Le mécanisme 31 est configuré pour transformer le mouvement initié par le second actionneur 46 en un mouvement rotatif de la pale correspondante 5.

Avantageusement, le second actionneur 46 est commun à toutes les pales 5.

Le mouvement rotatif du rotor du moteur électrique permet de régler de manière synchronisée le calage de l'ensemble des pales 5 via notamment le circuit hydraulique 45 et les différents mécanismes 31.

Le circuit hydraulique 45 est dit autonome (ou indépendant) en énergie hydraulique, et autrement dit le circuit hydraulique 45 ne reçoit pas d'énergie hydraulique en provenance du repère fixe.

Le stator du moteur électrique est fixé sur le rotor 3.

Le second actionneur 46 comprend un élément fixe par rapport au rotor 3 et un élément mobile par rapport à l'élément fixe (et par conséquent par rapport au rotor 3). L'élément mobile est lié aux mécanismes 31. Le second actionneur 46 peut être linéaire ou rotatif.

Le mécanisme 31 comprend par exemple, pour chaque pale, une manivelle présentant une première extrémité centrée sur l'axe Y et couplée en rotation avec la pale correspondante et une seconde extrémité excentrée par rapport à l'axe Y et solidaire de l'élément mobile du second actionneur 46.

Avantageusement, le circuit 45 comprend un accumulateur configuré pour mettre en position drapeau les pales, en particulier en cas de défaillance du transformateur tournant 36. L'accumulateur est par exemple un réservoir de liquide sous pression.

Le circuit 45 peut comprendre en outre un ou plusieurs préactionneurs configurés pour notamment contrôler la circulation du liquide sous pression au sein du circuit 45. Un préactionneur correspond par exemple à un distributeur, une valve ou une servovalve. Le moteur électrique peut comprendre un réducteur.

L'ensemble d'alimentation 32 du moteur électrique est identique à celle d'un actionneur électrique détaillé ci-dessus en lien avec le premier mode de réalisation.

Selon le quatrième mode de réalisation illustré sur la figure 4, l'anneau 14 est disposé autour de l'arbre 15. La portion tronconique 16 de l'arbre 15 s'étend autour de la portion cylindrique 17 de l'arbre 15. La portion tronconique 16 s'évase de l'amont vers l'aval. La portion tronconique 16 et la portion cylindrique 17 de l'arbre 15 forment une épingle en demi-coupe axiale.

Le système de commande 8 du quatrième mode de réalisation est identique à celui du troisième mode de réalisation.

En comparaison par rapport au troisième mode de réalisation, l'architecture moteur du quatrième mode de réalisation présente notamment un encombrement axial réduit.

## Revendications

1. Turbomachine (1) d'axe longitudinal (X) comprenant :
- un rotor (3) portant au moins une pale à calage variable (5), ledit rotor (3) étant guidé en rotation par rapport à une structure fixe (4) de ladite turbomachine (1) via un premier palier (6) et un second palier (7) ;
- un système de commande du calage (8) de ladite au moins une pale (5), ledit système de commande (8) étant solidaire dudit rotor (3) et comprenant au moins un premier actionneur (9) mis en mouvement par une énergie, ledit système de commande (8) étant disposé axialement en amont desdits premier et second paliers (6, 7) ;
- un dispositif de transfert de ladite énergie (10) disposé axialement entre le premier palier (6) et le second palier (7), ledit dispositif de transfert (10) comprenant un organe fixe (11) solidaire de ladite structure fixe (4) et un organe mobile (12) solidaire dudit rotor (3) ;
**caractérisée en ce que** le rotor (3) est annulaire et définit un espace interne ouvert (13) vers l'amont dans lequel est placé ledit système de commande (8).

2. Turbomachine (1) selon la revendication 1, **caractérisée en ce que** le rotor (3) comprend un anneau de support (14) de ladite au moins une pale (5) et un arbre (15) présentant une portion tronconique (16) et une portion cylindrique (17) sur laquelle sont rapportés lesdits premier et second paliers (6, 7) ainsi que ledit organe mobile (12) dudit dispositif de transfert (10).

3. Turbomachine (1) selon l'une des revendications précédentes, **caractérisée en ce que** ledit premier actionneur (9) est un actionneur hydraulique, ledit dispositif de transfert (10) étant un raccord tournant (33), ledit système de commande (8) comprenant un mécanisme (31) configuré pour transformer le mouvement initié par ledit actionneur hydraulique en un mouvement rotatif de ladite au moins une pale (5).

4. Turbomachine (1) selon l'une des revendications 1 à 2, **caractérisée en ce que** ledit premier actionneur (9) est un actionneur électrique, ledit dispositif de transfert (10) étant un transformateur tournant (36), ledit système de commande (8) comprenant un mécanisme (31) configuré pour transformer le mouvement initié par ledit actionneur électrique en un mouvement rotatif de ladite au moins une pale (5).

5. Turbomachine (1) selon la revendication 4, **caractérisée en ce que** ledit premier actionneur (9) est un moteur électrique comportant un arbre de sortie (39) rotatif, ladite au moins une pale (5) étant mobile en rotation autour d'un axe (Y) sensiblement perpendiculaire audit axe (X), ledit mécanisme (31) comprenant une manivelle (40) présentant une première extrémité centrée sur ledit axe (Y) et couplée en rotation avec ladite au moins une pale (5) et une seconde extrémité présentant un suiveur de came (41) excentré par rapport audit axe (Y), ledit suiveur de came (41) coopérant avec une came (42) se présentant sous la forme d'une rainure pratiquée dans une bague (43), ladite bague (43) étant couplée en rotation avec ledit arbre de sortie (39) dudit moteur électrique.

6. Turbomachine (1) selon l'une des revendications 1 à 2, **caractérisée en ce que** ledit dispositif de transfert (10) est un transformateur tournant (36), ledit premier actionneur (9) est un moteur électrique configuré pour actionner une pompe (44) d'un circuit hydraulique (45) solidaire dudit rotor (3), ledit circuit (45) comprenant un réservoir de liquide connecté avec ladite pompe (44), ledit circuit (45) comprenant un second actionneur (46) hydraulique alimenté en liquide sous pression par ladite pompe (44), ledit système de commande (8) comprenant un mécanisme (31) configuré pour transformer le mouvement initié par ledit second actionneur (46) en un mouvement rotatif de ladite au moins une pale (5).

7. Turbomachine (1) selon la revendication 6, **caractérisée en ce que** ledit circuit (45) comprend un accumulateur configuré pour mettre en position drapeau ladite au moins une pale (5), en particulier en cas de défaillance du transformateur tournant (36).

8. Turbomachine (1) selon l'une des revendications précédentes, **caractérisée en ce que** le rotor (3) est guidé en rotation par rapport à un support (18) annulaire de ladite structure fixe (4), ledit support (18) étant rapporté sur un moyeu interne (21) d'un carter intermédiaire (22), ledit support (18) comprenant une paroi amont (23) tronconique, une paroi aval (24) tronconique et une paroi cylindrique (25) tubulaire dans laquelle sont logés le premier palier (6) et l'organe fixe (11) dudit dispositif de transfert (10), la paroi cylindrique (25) étant disposée axialement entre ladite paroi amont (23) et ladite paroi aval (24).

9. Turbomachine (1) selon la revendication 8, **caractérisée en ce que** le premier palier (6) est disposé en amont du second palier (7).

10. Turbomachine (1) selon l'une des revendications précédentes, **caractérisée en ce que** ledit rotor (3) est couplé en rotation à un porte-satellites d'un réducteur (19).

## Patentansprüche

1. Turbotriebwerk (1) mit Längsachse (X), umfassend:
- einen Rotor (3), der mindestens eine Schaufel mit variabler Feststellposition (5) trägt, wobei der Rotor (3) über ein erstes Lager (6) und ein zweites Lager (7) in Bezug auf eine festsitzende Struktur (4) des Turbotriebwerks (1) in Drehung versetzt wird;
- ein Steuersystem der Feststellposition (8) der mindestens einen Schaufel (5), wobei das Steuersystem (8) fest mit dem Rotor (3) verbunden ist und mindestens ein erstes Stellglied (9) umfasst, das durch eine Energie in Bewegung versetzt wird, wobei das Steuersystem (8) axial stromaufwärts des ersten und des zweiten Lagers (6, 7) angeordnet ist;
- eine Energieübertragungsvorrichtung (10), die axial zwischen dem ersten Lager (6) und dem zweiten Lager (7) angeordnet ist, wobei die Übertragungsvorrichtung (10) ein festsitzendes Organ (11), das fest mit der festsitzenden Struktur (4) verbunden ist, und ein bewegliches Organ (12), das fest mit dem Rotor (3) verbunden ist, umfasst;
**dadurch gekennzeichnet, dass** der Rotor (3) ringförmig ist und einen zur stromaufwärtigen Seite offenen Innenraum (13) definiert, in dem das Steuersystem (8) platziert ist.

2. Turbotriebwerk (1) nach Anspruch 1, **dadurch gekennzeichnet, dass** der Rotor (3) einen Stützring (14) der mindestens einen Schaufel (5) und eine Welle (15), die einen kegelförmigen Abschnitt (16) und einen zylindrischen Abschnitt (17) aufweist, auf der das erste und das zweite Lager (6, 7) angebracht sind, sowie das bewegliche Organ (12) der Übertragungsvorrichtung (10) umfasst.

3. Turbotriebwerk (1) nach einem der vorstehenden Ansprüche, **dadurch gekennzeichnet, dass** das erste Stellglied (9) ein hydraulisches Stellglied ist, wobei die Übertragungsvorrichtung (10) eine Drehverbindung (33) ist, wobei das Steuersystem (8) einen Mechanismus (31) umfasst, der konfiguriert ist, um die von dem hydraulischen Stellglied eingeleitete Bewegung in eine drehende Bewegung der mindestens einen Schaufel (5) umzuwandeln.

4. Turbotriebwerk (1) nach einem der Ansprüche 1 bis 2, **dadurch gekennzeichnet, dass** das erste Stellglied (9) ein elektrisches Stellglied ist, wobei die Übertragungsvorrichtung (10) ein drehender Transformator (36) ist, wobei das Steuersystem (8) einen Mechanismus (31) umfasst, der konfiguriert ist, um die von dem elektrischen Stellglied eingeleitete Bewegung in eine drehende Bewegung der mindestens einen Schaufel (5) umzuwandeln.

5. Turbotriebwerk (1) nach Anspruch 4, **dadurch gekennzeichnet, dass** das erste Stellglied (9) ein Elektromotor ist, der eine drehende Abtriebswelle (39) umfasst, wobei die mindestens eine Schaufel (5) um eine Achse (Y), die im Wesentlichen senkrecht zur Achse (X) ist, drehbeweglich ist, wobei der Mechanismus (31) eine Kurbel (40) umfasst, die ein erstes Ende, das auf der Achse (Y) zentriert und mit der mindestens einen Schaufel drehend gekoppelt ist, und ein zweites Ende umfasst, das einen Nockenfolger (41) aufweist, der in Bezug auf die Achse (Y) exzentrisch ist, wobei der Nockenfolger (41) mit einer Nocke (42) zusammenwirkt, die sich in der Form einer in einem Ring (43) gefertigten Nut darstellt, wobei der Ring (43) mit der Abtriebswelle (39) des Elektromotors drehend gekoppelt ist.

6. Turbotriebwerk (1) nach einem der Ansprüche 1 bis 2, **dadurch gekennzeichnet, dass** die Übertragungsvorrichtung (10) ein drehender Transformator (36) ist, wobei das erste Stellglied (9) ein Elektromotor ist, der konfiguriert ist, um eine Pumpe (44) eines Hydraulikkreislaufs (45), der fest mit dem Rotor (3) verbunden ist, zu betätigen, wobei der Kreislauf (45) einen mit der Pumpe (44) verbundenen Flüssigkeitsbehälter umfasst, wobei der Kreislauf (45) ein zweites hydraulisches Stellglied (46) umfasst, das durch die Pumpe (44) mit Druckflüssigkeit versorgt wird, wobei das Steuersystem (8) einen Mechanismus (31) umfasst, der konfiguriert ist, um die von dem zweiten Stellglied (46) eingeleitete Bewegung in eine drehende Bewegung der mindestens einen Schaufel (5) umzuwandeln.

7. Turbotriebwerk (1) nach Anspruch 6, **dadurch gekennzeichnet, dass** der Kreislauf (45) einen Akkumulator umfasst, der konfiguriert ist, um die mindestens eine Schaufel (5) insbesondere im Falle eines Ausfalls des drehenden Transformators (36) in Fahnenstellung zu bringen.

8. Turbotriebwerk (1) nach einem der vorstehenden Ansprüche, **dadurch gekennzeichnet, dass** der Rotor (3) in Bezug auf eine ringförmige Stütze (18) der festsitzenden Struktur (4) in Drehung versetzt wird, wobei die Stütze (18) an einer inneren Nabe (21) eines Zwischengehäuses (22) angebracht ist, wobei die Stütze (18) eine kegelförmige stromaufwärtige Wand (23), eine kegelförmige stromabwärtige Wand (24) und eine rohrförmige zylindrische Wand (25) umfasst, in der das erste Lager (6) und das festsitzende Organ (11) der Übertragungsvorrichtung (10) aufgenommen sind, wobei die zylindrische Wand (25) axial zwischen der stromaufwärtigen Wand (23) und der stromabwärtigen Wand (24) angeordnet ist.

9. Turbotriebwerk (1) nach Anspruch 8, **dadurch gekennzeichnet, dass** das erste Lager (6) stromaufwärts des zweiten Lagers (7) angeordnet ist.

10. Turbotriebwerk (1) nach einem der vorstehenden Ansprüche, **dadurch gekennzeichnet, dass** der Rotor (3) mit einem Planetenträger eines Untersetzungsgetriebes (19) drehend gekoppelt ist.

## Claims

1. Turbine engine (1) with a longitudinal axis (X) comprising:
- a rotor (3) supporting at least one variable pitch blade (5), said rotor (3) being guided in rotation relative to a fixed structure (4) of said turbine engine (1) via a first bearing (6) and a second bearing (7);
- a system (8) for controlling the pitch of said at least one blade (5), said controlling system (8) being secured to said rotor (3) and comprising at least one first actuator (9) set in motion by an energy, said controlling system (8) being arranged axially upstream of said first and second bearings (6, 7);
- a device (10) for transferring said energy disposed axially between the first bearing (6) and the second bearing (7), said transferring device (10) comprising a fixed member (11) secured to said fixed structure (4) and a moving member (12) secured to said rotor (3);
**characterised in that** the rotor (3) is annular and defines an inner space (13) open toward the upstream side and inside of which the controlling system (8) is placed.

2. Turbine engine (1) according to claim 1, **characterised in that** the rotor (3) comprises a ring (14) for supporting said at least one blade (5) and a shaft (15) having a frustoconical portion (16) and a cylindrical portion (17) on which said first and second bearings (6, 7) and said moving member (12) of said transferring device (10) are attached.

3. Turbine engine (1) according to one of the preceding claims, **characterised in that** said first actuator (9) is a hydraulic actuator, said transferring device (10) being a rotary union (33), said controlling system (8) comprising a mechanism (31) configured to transform the movement initiated by said hydraulic actuator into a rotary movement of said at least one blade (5).

4. Turbine engine (1) according to one of claims 1 to 2, **characterised in that** said first actuator (9) is an electric actuator, said transferring device (10) being a rotary transformer (36), said controlling system (8) comprising a mechanism (31) configured to transform the movement initiated by said electric actuator into a rotary movement of said at least one blade (5).

5. Turbine engine (1) according to claim 4, **characterised in that** said first actuator (9) is an electric motor comprising a rotary output shaft (39), said at least one blade (5) being rotatable about an axis (Y) substantially perpendicular to said axis (X), said mechanism (31) comprising a crank (40) having a first end centred on said axis (Y) and rotationally coupled with said at least one blade (5) and a second end having a cam follower (41) eccentric with respect to said axis (Y), said cam follower (41) cooperating with a cam (42) in the form of a groove made in a ring (43), said ring (43) being rotationally coupled to said output shaft (39) of said electric motor.

6. Turbine engine (1) according to one of claims 1 to 2, **characterised in that** said transferring device (10) is a rotary transformer (36), said first actuator (9) is an electric motor configured to actuate a pump (44) of a hydraulic circuit (45) secured to said rotor (3), said circuit (45) comprising a liquid tank connected with said pump (44), said circuit (45) comprising a second hydraulic actuator (46) supplied with pressurised liquid by said pump (44), said controlling system (8) comprising a mechanism (31) configured to transform the movement initiated by said second actuator (46) into a rotary movement of said at least one blade (5).

7. Turbine engine (1) according to claim 6, **characterised in that** said circuit (45) comprises an accumulator configured to feather said at least one blade (5), in particular in the event of failure of the rotary transformer (36).

8. Turbine engine (1) according to one of the preceding claims, **characterised in that** the rotor (3) is guided in rotation with respect to an annular support (18) of said fixed structure (4), said support (18) being attached to an inner hub (21) of an intermediate casing (22), said support (18) comprising a frustoconical upstream wall (23), a frustoconical downstream wall (24) and a tubular cylindrical wall (25) in which the first bearing (6) and the fixed member (11) of said transferring device (10) are housed, the cylindrical wall (25) being disposed axially between said upstream wall (23) and said downstream wall (24).

9. Turbine engine (1) according to claim 8, **characterised in that** the first bearing (6) is disposed upstream of the second bearing (7).

10. Turbine engine (1) according to one of the preceding claims, **characterised in that** said rotor (3) is coupled in rotation to a planet carrier of a reduction gear (19).
